# EUROPEAN PATENT APPLICATION

(11) **EP 2 661 059 A1**
(43) Date of publication of application: **06.11.2013**
(21) Application number: 12736657.3
(22) Date of filing: 19.01.2012
(51) Int. Cl.: H04M 1/21, H04M 1/65

(54) **METHOD AND MOBILE TERMINAL FOR STORING MEMORANDUM DURING CALLING**

(30) Priority: 21.01.2011 CN 201110024453
(71) Applicant: Huawei Device Co., Ltd., Shenzhen, Guangdong 518129 (CN)
(72) Inventor: JIN, Ying, Shenzhen Guangdong 518129 (CN)
(74) Representative: Körber, Martin Hans
(86) International application number: PCT/CN2012/070575
(87) International publication number: WO 2012/097739

(57) **Abstract**

Embodiments of the present invention disclose a method and a mobile terminal for storing a memo during a call, which are used to store called party information to a memo during a call. The method of the embodiments of the present invention includes: receiving, by a mobile terminal, a memo application request when communicating with a mobile terminal of a called party; obtaining, by the mobile terminal, called party information of the called party, where the called party information includes a phone number of the called party and/or a name corresponding to the phone number; and storing the called party information in a memo. The embodiments of the present invention further disclose a mobile terminal related to the method, which can store called party information in a memo during a call, thereby improving the intelligent interaction capability between the mobile terminal and a user.

## Description

This application claims priority to Chinese Patent Application No. 201110024453.4, filed with the Chinese Patent Office on January 21, 2011 and entitled "METHOD AND MOBILE TERMINAL FOR STORING MEMO DURING CALL", which is hereby incorporated by reference in its entirety.

### TECHNICAL FIELD

The present invention relates to the field of mobile communications technologies, and in particular, to a method and a mobile terminal for storing a memo during a call.

### BACKGROUND

With the development of communications technologies, mobile terminals have better performance and more functions. A mobile terminal not only can provide call, text message, and mobile image services, but also can provide functions such as personal information and schedule management. An existing mobile terminal allows a user to send a short message, query a phone book, and record a memo or use other functions during a call, where, the memo function is a technical function that allows the user to open a record list, input information, and store the record list during a call. The inventor discovers the following technical disadvantages of the prior art during implementation of embodiments of the present invention: A memo only stores information input by a user, and in this way, the content prompted by the memo for the user is limited, thereby reducing the intelligent interaction capability between the mobile terminal and the user.

### SUMMARY

Embodiments of the present invention provide a method and a mobile terminal for storing a memo during a call, which are used to store called party information (such as a name and a phone number) in a memo during a call, to provide more abundant memo content, thereby improving the intelligent interaction capability between a mobile terminal and a user.

A method in an embodiment of the present invention includes: receiving, by a mobile terminal, a memo application request, when communicating with a mobile terminal of a called party; obtaining, by the mobile terminal, called party information of the called party, where the called party information includes a phone number of the called party and/or a name corresponding to the phone number; and storing the called party information in a memo.

An apparatus in an embodiment of the present invention includes: a receiving unit, configured to receive, by a mobile terminal, a memo application request when communicating with a mobile terminal of a called party; an obtaining unit, configured to obtain, by the mobile terminal, called party information of the called party, where the called party information includes a phone number of the called party and/or a name corresponding to the phone number; and a storage unit, configured to store the called party information in a memo.

It can be seen from the foregoing technical solutions that, the embodiments of the present invention have the following advantages.

By obtaining called party information of a called party who communicates with a user from a communication signal received by a mobile terminal and storing the obtained called party information in a memo, the called party information can be effectively stored, to provide more abundant memo content, thereby improving the intelligent interaction capability between the mobile terminal and the user.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a method for storing a memo during a call according to an embodiment of the present invention;
FIG. 2 is another schematic diagram of a method for storing a memo during a call according to an embodiment of the present invention;
FIG. 3 is a schematic diagram of a mobile terminal for storing a memo during a call according to an embodiment of the present invention; and
FIG. 4 is another schematic diagram of a mobile terminal for storing a memo during a call according to an embodiment of the present invention.

### DESCRIPTION OF EMBODIMENTS

Embodiments of the present invention provide a method and a mobile terminal for storing a memo during a call, which are configured to store called party information of a called party who communicates with a mobile terminal user in a memo, so that more abundant content can be stored in the memo, thereby improving the intelligent interaction capability between the mobile terminal and the user.

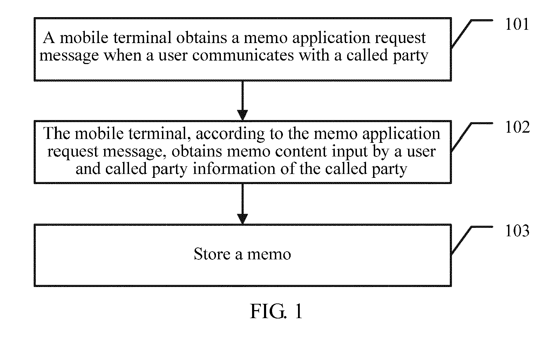

Refer to FIG. 1, which illustrates an embodiment of a method for storing a memo during a call according to an embodiment of the present invention, including:
Step 101: A mobile terminal obtains a memo application request message when a user communicates with a called party.

The mobile terminal allows the user to open a memo and edit memo content during a call. When the user opens a memo program on a system, the mobile terminal receives the memo application request message from the user and displays a memo information input interface, and the user may store a video file or a text file in the memo.

In the embodiment of the present invention, the mobile terminal refers to a mobile phone or a smart phone with a plurality of application functions.
Step 102: The mobile terminal obtains the memo content input by the user and called party information of the called party according to the memo application request message.

When the user is making a call, the mobile terminal obtains, after receiving the memo application request message from the user, the memo content input by the user and the called party information of the called party who communicates with the user, where the called party information includes a phone number of the called party and/or a name corresponding to the phone number.
Step 103: Store a memo.

After obtaining the called party information and the memo content input by the user, the mobile terminal stores the obtained called party information and memo content in the memo.

In the embodiment of the present invention, the user stores the obtained called party information in the memo during a call, which makes the content in the memo more abundant, thereby improving the intelligent interaction capability between the mobile terminal and the user.

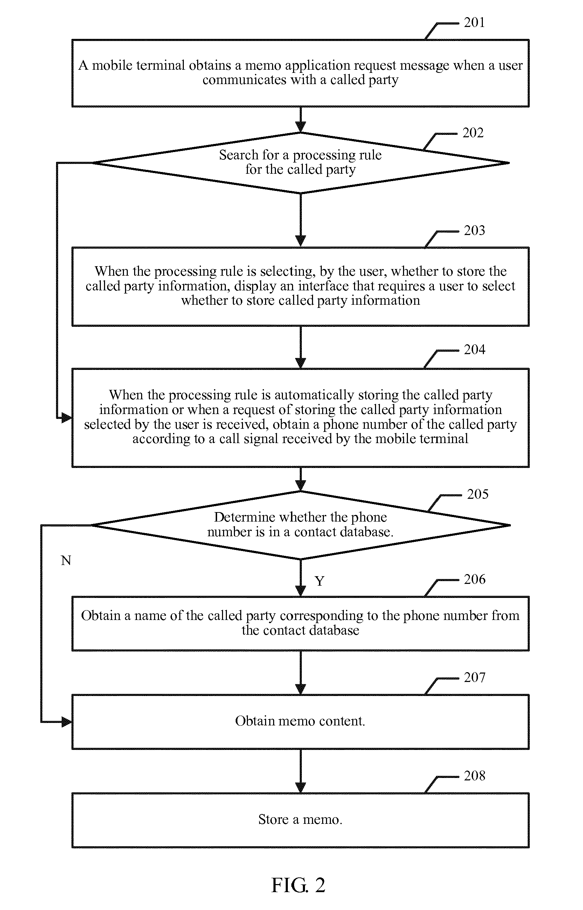

To better understand the technology, refer to FIG. 2, which illustrates an embodiment of a method for storing a memo during a call according to an embodiment of the present invention, including:
Step 201: A mobile terminal obtains a memo application request message when a user communicates with a called party.

When the user uses a memo function of the mobile terminal during a call, the mobile terminal obtains the memo application request message.
Step 202: Search for a rule for processing called party information, and when the processing rule is automatically storing the called party information, perform step 204, or when the processing rule is selecting, by the user, whether to store the called party information, perform step 203.

The mobile terminal searches for the rule for processing the called party information after receiving the memo application request from the user, where the called party information includes a phone number of the called party and/or a name corresponding to the phone number who communicates with the user. In addition, the called party information may further include information such as an email address of the called party and an address of the called party. The rule for processing the called party information includes: automatically storing the called party information, selecting, by the user, whether to store the called party information, and never storing the called party information. The user may set in advance the rule for processing the called party information. If the user does not set it in advance, the called party information is processed according to a default rule, and the default rule may be any of the foregoing rules for processing the called party information.
Step 203: Display an interface that requires the user to select whether to store the called party information, and when a request that the user selects to store the called party information is received, continue to perform step 204.

When the rule for processing the called party information is selecting, by the user, whether to store the called party information, the mobile terminal displays the interface that requires the user to select whether to store the called party information each time the user uses the memo function during a call. The user may determine whether to store the called party information based on an actual requirement. When the user selects not to store the called party information, the mobile terminal terminates an operation of storing the called party information.
Step 204: Obtain the phone number of the called party according to a communication signal received by the mobile terminal.

When the user selects to store the called party information, that is, when the mobile terminal receives a request of storing the called party information from the user, or when the rule for processing the called party information is automatically storing the called party information, the mobile terminal obtains the phone number of the called party who communicates with the user from the received communication signal.
Step 205: Determine whether the phone number is in a contact database, and if yes, perform step 206; if not, perform step 207.

To store more information, the mobile terminal further determines whether the obtained phone number is in a contact database, where the contact database refers to personal information of contacts stored in the mobile terminal by the user. After obtaining the phone number of the called party from the communication signal, the mobile terminal uses the obtained phone number as an index to search the contact database to determine whether the called party information is in the contact database.
Step 206: Obtain a name of a called party corresponding to the phone number from the contact database.

When the obtained phone number is in the contact database, the mobile terminal obtains the name of the called party corresponding to the phone number from the contact database; where the contact database refers to personal information of contacts stored in the mobile terminal by the user, including one or more of information such as phone numbers and names corresponding to the phone numbers, company addresses, home addresses and mail box numbers of contacts.
Step 207: Obtain the memo content.

When the user of the mobile terminal uses the memo function, the user may edit the memo content, where the memo content is text information or a video file; and the mobile terminal obtains the memo content edited by the user for storage.
Step 208: Store the memo.

After obtaining the called party information and the memo content, the mobile terminal stores the obtained called party information and memo content in the memo, where the called party information includes the phone number and/or the name corresponding to the phone number of the called party.

Specifically, after the determination in step 205, if the phone number of the called party is not in the contact database, the phone number of the called party and the memo content are stored in the memo.

If the phone number is in the contact database, after the mobile terminal obtains the name corresponding to the phone number in the contact database in step 206, the mobile terminal stores the memo content, and the called party information including the phone number and name of the called party, in the memo.

It should be noted that, in the embodiment of the present invention, generally the name corresponding to the called party in the contact database is obtained and the phone number and the name corresponding to the phone number of the called party are stored in the memo, to complement information contained in the memo. A preferable solution is that the user may select the data that needs to be stored by presetting a data storage type. For example, the user may select to store the phone number, the name, and the email account of the called party in the memo or select to store the name and a company address of the called party in the memo. In this case, when the phone number of the called party is in the contact database, the mobile terminal filters out the data type preset by a system from the contact database and stores the corresponding data in the memo, so that storage of the called party information becomes more flexible. In an actual application, the type of the called party information stored in the memo may be set according to a specific condition and is not limited herein.

It should be noted that, the called party information may be stored in a starting field of the memo or in a field corresponding to the end of the memo. The specific storage location may be set by the user according to a requirement and is not limited herein.

In the embodiment of the present invention, by storing the obtained called party information of the called party in the memo, more information is contained in the memo, thereby improving the intelligent interaction capability between the mobile terminal and the user.

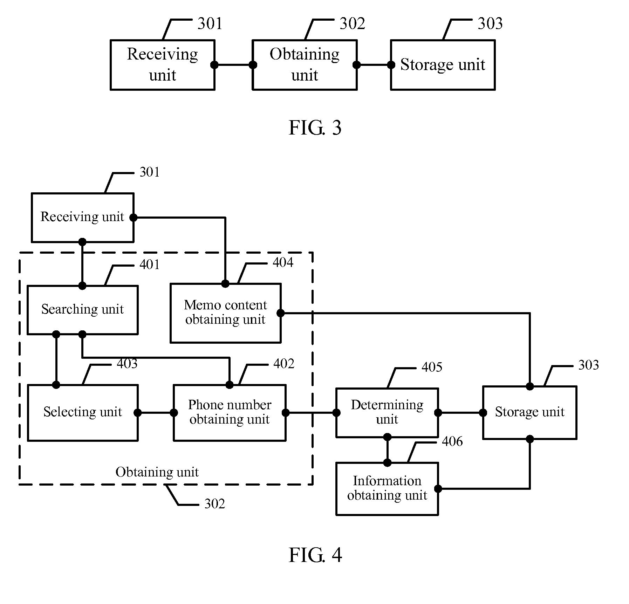

Refer to FIG. 3, which illustrates an embodiment of a mobile terminal for storing a memo during a call according to an embodiment of the present invention, including:
a receiving unit 301, configured to obtain, by the mobile terminal, a memo application request message when a user communicates with a called party;
an obtaining unit 302, configured to obtain, by the mobile terminal, memo content input by the user and called party information of the called party according to the memo application request message, where the called party information includes a phone number of the called party and/or a name corresponding to the phone number; and
a storage unit 303, configured to store a memo, where the memo includes the called party information and the memo content.

In the embodiment of the present invention, the receiving unit 301 receives the memo application request message, the obtaining unit 302 obtains the information of the called party who communicates with the user and the memo content after the receiving unit 301 receives the request, and the storage unit 303 stores the called party information and the memo content in the memo.

To describe the mobile terminal in further detail, refer to FIG. 4, which illustrates an embodiment of a mobile terminal for storing a memo during a call according to an embodiment of the present invention, including:
the receiving unit 301, the obtaining unit 302, and the storage unit 303 described in the embodiment shown in FIG. 3, and the description about these units is the same as that in the embodiment shown in FIG. 3 and is not described herein again

The obtaining unit 302 includes:
a searching unit 401, configured to search for a rule for processing the called party information;
a selecting unit 402, configured to: when a preset processing rule is selecting, by the user, whether to store the called party information, display an interface that requires the user to select whether to store the called party information;
a phone number obtaining unit 403, configured to: when the processing rule is automatically storing the called party information or when a request of storing the called party information is received, obtain the phone number of the called party according to a communication signal received by the mobile terminal; and
a memo content obtaining unit 404, configured to obtain the memo content input by the user.

The mobile terminal further includes:
a determining unit 405, configured to determine whether the phone number is in a contact database; and
an information obtaining unit 406, configured to obtain a name of the called party corresponding to the phone number from the contact database when the phone number is in the contact database.

In the embodiment of the present invention, after the receiving unit 301 receives the memo application request message, the memo content obtaining unit 404 of the obtaining unit 302 obtains the memo content input by the user, and the searching unit 401 searches for the rule for processing the called party information; when the rule for processing the called party information is automatically storing the called party information, the phone number obtaining unit 402 obtains the phone number of the called party based on the communication signal received by the mobile terminal; or when the rule for processing the called party information is selecting, by the user, whether to store the called party information, the selecting unit 403 displays the interface that requires the user to select whether to store the called party information; and after receiving the request of storing the called party information, the phone number obtaining unit 402 obtains the phone number of the called party based on the communication signal received by the mobile terminal.

After the mobile terminal obtains the phone number and the memo content, the determining unit 405 determines whether the phone number is in the contact database; if the phone number is in the contact database, the information obtaining unit 406 obtains the name of the called party corresponding to the phone number from the contact database, and after obtaining the name of the called party, the storage unit 303 stores the called party information and the memo content in the memo.

In the embodiment of the present invention, by storing the information of the called party who communicates with the user in the memo, information stored in the memo can be effectively increased, thereby improving the intelligent interaction capability between the mobile terminal and the user.

A person of ordinary skill in the art may understand that all or a part of the steps of the methods in the embodiments may be implemented by a program instructing relevant hardware. The program may be stored in a computer readable storage medium. The storage medium may be a read-only memory, a magnetic disk, or an optical disk.

A method and a mobile terminal for storing a memo during a call provided by the present invention are described above in detail. A person of ordinary skill in the art may make modifications to the specific implementation manners and application scopes according to the idea of the embodiments of the present invention. In conclusion, the content of the specification shall not be construed as a limitation to the present invention.

## Claims

1. A method for storing a memo during a call, comprising:
obtaining, by a mobile terminal, memo application request message when a user communicates with a called party;
obtaining, by the mobile terminal, according to the memo application request message, memo content input by the user and called party information of the called party, wherein the called party information comprises a phone number of the called party and/or a name corresponding to the phone number; and
storing a memo, wherein the memo comprises the called party information and the memo content.

2. The method according to claim 1, wherein the obtaining, by the mobile terminal, called party information of the called party specifically comprises:
searching for a rule for processing the called party information; and
if the processing rule is automatically storing the called party information, obtaining the phone number of the called party according to a communication signal received by the mobile terminal.

3. The method according to claim 2, further comprising:
if the processing rule is selecting, by the user, whether to store the called party information, displaying an interface that requires a user to select whether to store the called party information; and
if a request of storing the called party information is received, obtaining the phone number of the called party according to the communication signal received by the mobile terminal.

4. The method according to claim 2 or 3, wherein after the obtaining the phone number of the called party according to the communication signal received by the mobile terminal, the method comprises:
determining whether the phone number is in a contact database; and
if yes, obtaining a name of the called party corresponding to the phone number from the contact database.

5. A mobile terminal for storing a memo during a call, comprising:
a receiving unit, configured to obtain, by the mobile terminal, a memo application request message when a user communicates with a called party;
an obtaining unit, configured to obtain, by the mobile terminal, memo content input by the user and called party information of the called party according to the memo application request message, wherein the called party information comprises a phone number of the called party and/or a name corresponding to the phone number; and
a storage unit, configured to store a memo, wherein the memo comprises the called party information and the memo content.

6. The mobile terminal according to claim 5, wherein the obtaining unit comprises:
a searching unit, configured to search for a rule for processing the called party information;
a selecting unit, configured to: when a preset processing rule is selecting, by the user, whether to store the called party information, display an interface that requires the user to select whether to store the called party information;
a phone number obtaining unit, configured to: when the processing rule is automatically storing the called party information or when a request of storing the called party information is received, obtain the phone number of the called party according to a communication signal received by the mobile terminal; and
a memo content obtaining unit, configured to obtain the memo content input by the user.

7. The mobile terminal according to claim 5 or 6, further comprising:
a determining unit, configured to determine whether the phone number is in a contact database; and
an information obtaining unit, configured to obtain a name of the called party corresponding to the phone number from the contact database when the phone number is not in the contact database.
